# EUROPEAN PATENT APPLICATION

(11) **EP 2 536 142 A1**
(43) Date of publication of application: **19.12.2012**
(21) Application number: 11170041.5
(22) Date of filing: 15.06.2011
(51) Int. Cl.: H04N 7/26, H04N 13/00

(54) **Method and a system for encoding multi-view video content**

(71) Applicant: NEC CASIO Mobile Communications, Ltd., Kawasaki-shi Kanagawa 211-8666 (JP)
(72) Inventor: Lecroart, Benoît, 78380 BOUGIVAL (FR)
(74) Representative: Ilgart, Jean-Christophe

(57) **Abstract**

The present invention concerns a method for encoding Multi-view video content using a plurality of video source (4) for capturing a scene (2) from different points of view to produce said multi-view video content, comprising the following steps:
- defining, for each video source (4), video and audio encoding parameters based on topographical parameters specific to the area of the scene to be filmed and operating parameters specific to each video source, for controlling operation of each video source (4) when filming the scene,
- transmitting said encoding parameters to each video source (4) in order to optimize the contribution of each to the multi-view video content.

## Description

### TECHNICAL FIELD

The present invention concerns method and a system for encoding Multi-view video content using a plurality of video source for capturing a scene from different points of view to produce said multi-view video content.

The invention also concerns a computer program stored in a recording media and comprising instructions for implementing said method.

### STATE OF THE ART

In known methods for encoding Multi-view video contents, a number N of video flows originating from a number N of video sources are combined into a single flows by means of a codec such a MVC (MutiViewCoding), for example, is used. The single flow obtained is then compressed by removing the redundancies between the views.

A technical problem of these methods comes from the fact that each mobile encoder encodes the video flow with a full quality so the MultiView encoder receives a full encoded video flow from each video source.

Encoding the flow with a full quality results in large energy consumption in each video source. A typical bandwidth of a full HD video 1920x1080 is about 10 Mbits to 15 Mbits; for N Mobile devices, the bandwidth used on the network will be N*B which can be very large, more particularly for 3D video sources such as cameras embedded in a mobile phone for example.

Moreover, such scenario leads to poor multiview video content due to an overload of the network capacities, and a limited time of services.

The present invention aims at optimizing the contribution of each video source to the multiview video content by removing redundancy between the video produced by the different video sources.

### DESCRIPTION OF THE INVENTION

The objective of the invention is achieved by means of a method for encoding Multi-view video content using a plurality of video source for capturing a scene from different points of view comprising the following steps:
- defining, for each video source, encoding parameters based on topographical parameters specific to the area of the scene to be filmed and operating parameters specific to each video source, for controlling operation of each video source when filming the scene,
- transmitting said encoding parameters to each video source in order to optimize the contribution of each to the multi-view video content.

According to a preferred embodiment of the invention, the topographical parameters comprise geographical data describing the area of the scene and the positions of each video source within said area.

Preferably, encoding parameters are computed by an encoders coordinator that communicates with each video source.

In the preferred embodiment of the invention, the geographical data and the positions of each video source within said area are transmitted by each video source to said encoders coordinator.

The method according to the invention is implemented in a system for encoding Multi-view video content comprising:
- a plurality of video sources for capturing a scene from different points of view to produce a multi-view video content,
- an encoders coordinator adapted for defining, for each video source, encoding parameters based on topographical parameters specific to the area of the scene to be filmed and operating parameters specific to each video source, for controlling operation of each video source when filming the scene,
- means for transmitting said encoding parameters to each video source in order to optimize the contribution of each video source to the multi-view video content.

In a preferred embodiment of the invention, the encoders coordinator comprises a wireless modem and each video source is a mobile phone comprising a wireless modem and at a camera that can be a stereoscopic.

The multiview videos produced further include video and audio information. In an other embodiment of the invention, the encoders coordinator can also use in a similar fashion as for the video, the audio information for controlling the audio encoders of the video source

Thanks to the invention, each video source encodes only the images part of the scene corresponding to the encoding parameters received from the encoders coordinator and transmits only these images to the Multiview encoder.

### BRIEF DESCRIPTION OF DRAWINGS

Other features and advantages of the invention will appear from the following description taken as a non limiting example with reference to the following drawings in witch;
- Figures 1 represents schematically a system for encoding Multi-view video content according to the invention,
- Figure 2 illustrates the architecture of a mobile video source according to the invention,
- Figure 3 illustrates the architecture of an encoders coordinator according to the invention,
- Figure 4 shows a flow chart illustration communication between video sources and an encoders coordinator according to the invention,
- Figures 5 and 6 illustrate schematically operation of video sources according to the invention.

### DESCRIPTION OF A DETAILED ENBODIMENT OF THE INVENTION

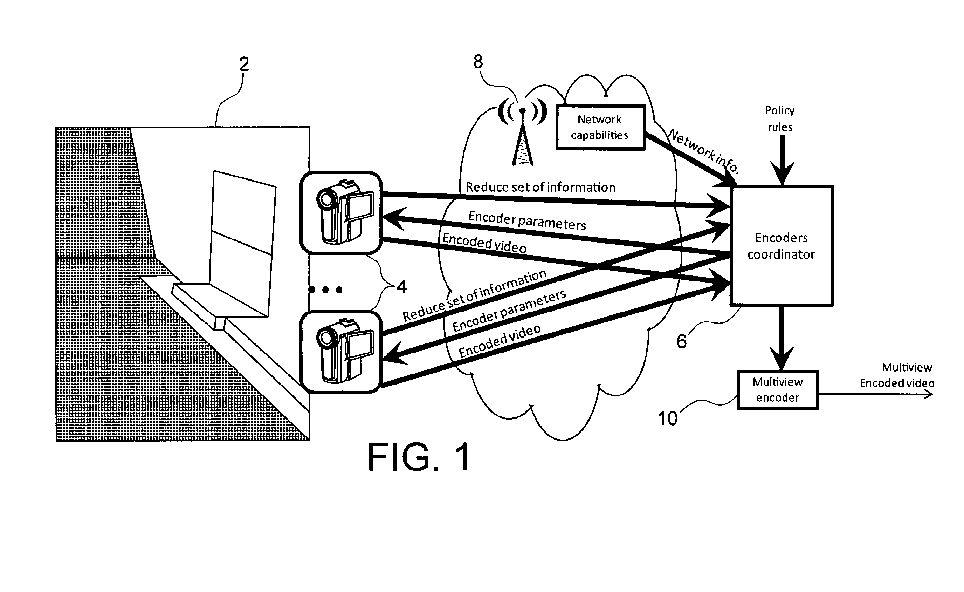

Figure 1 illustrates schematically a scene 2 being filmed simultaneously by a system comprising several mobile cameras 4 arranged at different locations around the scene to film, an encoders coordinator 6 communicating with each camera 4 via an antenna 8 part of a wireless communication system, a multiview encoder 10 connected to the encoders coordinator 6 for receiving encoded video from said encoders coordinator 6 and for transmitting said encoded video to a recording system or to an end user for live service.

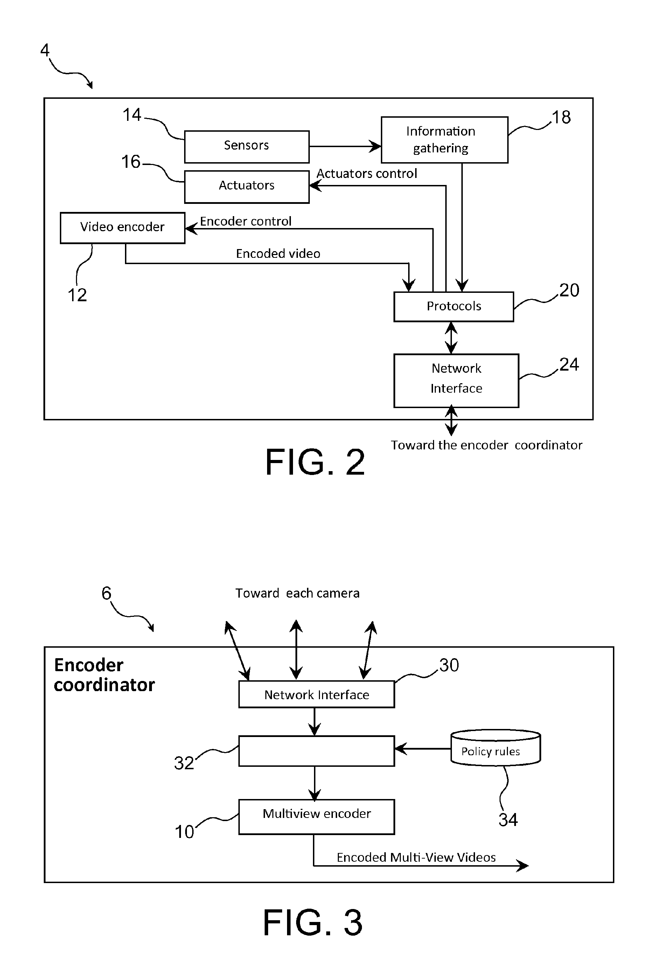

As schematically illustrated by figure 2, a mobile camera 4 comprises a video encoder module 12, a sensor module 14, an actuator module 16, an information gathering module 18, a transmission protocol module 20 for exchanging messages with the encoders coordinator 6, and a network interface module 24 of a communication network.

As schematically illustrated by figure 3, the encoders coordinator 6 comprises a network interface 30, a video multiplexor module 32, a data base comprising policy rules 34.

In the embodiment described by figure 3, the multiview encoder 10 is embedded with said the encoders coordinator 6. However, said multiview encoder 10 may be arranged separately from the encoders coordinator 6.

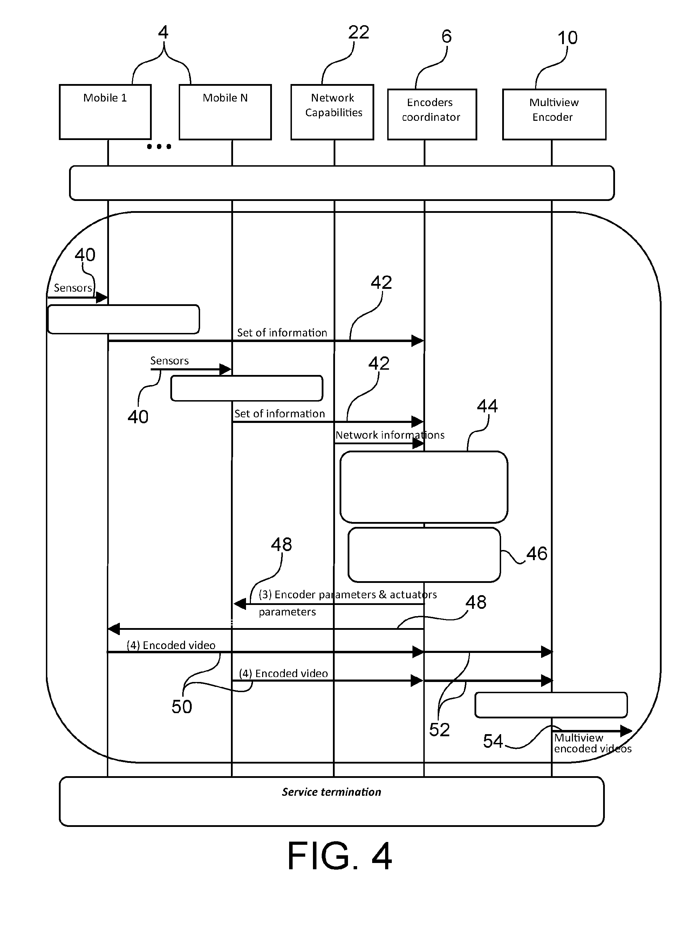

Figure 4 is a flow chart illustrating communication between the cameras 4, the encoders coordinator 6, and the multiview encoder in order to optimize the contribution of each camera 4 to the multi-view video content during a capture sequence of a scene.

At step 40, the sensor module 14 of each camera 4 captures images and gathers topographical information of the scene and sensors information, and, at step 42, dynamically transmits the relevant information to the encoders coordinator 6 using a predefined protocol.

The relevant information comprises:
- operating parameters specific to each camera and obtained by sensors measurements such as lens parameters value (depth, aperture, focal), camera resolution; direction pointed by the camera (X, Y, Z, possibly obtained by a gyroscope or other means), depth obtained from Time-of-flight camera, Vibration, camera movement, etc ...,
- operating parameters specific to the mobile device in which the camera is embedded such as a mobile phone for example: mobile battery level, geographic position, including altitude.

At the same time, the encoders coordinator 6 receives network information from the communication network such as network bandwidth capacities. The information can relates to the overall network capacities, and to specific network capacities related to each camera 4.

At step 44, the encoders coordinator 6 analyses the received information including the encoded video captured by each camera and determines, at step 46, the suitable encoding parameters for each camera 4 based on topographical information of the scene, network information, operating parameters specific to each camera, and if the camera is embedded in a mobile device, on the operating parameters specific to said mobile device.

At step 48, the encoders coordinator 6 transmits to each camera 4 the encoding parameters and instructions for the actuator module 16 of each camera 4 in order to control the operation of each camera 4.

The control of operation of each camera 4 may comprise the following functionalities:
- adapting the bandwidth used by the mobile device, to the network capacities (avoid overloading),
- removing redundancy of information between the different cameras (i.e.: removing overlapping area of different sources),
- adapting the encoding parameters of the cameras to the expected quality for the multi-view encoded video (i.e.: adapting video resolutions, video frame rate...)
- optimizing the mobile devices energy.

It is to be noted that the above functionalities are performed by means of a distributed algorithm implemented in the encoders coordinator 6 and in each camera 4.

The encoded video received by the encoders coordinator 6 from each camera 4 can be used as input parameters for the encoders coordinator algorithms.

In another embodiment of the invention, the encoders coordinator 6 could be either realized as a central function co-located within the multimedia encoder equipment, or could be alternatively distributed over the network without departing from the scope of the invention.

At step 50, each camera 4 transmits to the encoders coordinator 6 encoded video according to the encoding parameters and to the control instructions received from the encoders coordinator 6.

At step 52, the encoders coordinator 6 transmits the encoded video received from each camera 4 to the multiview encoder 10. The later, generates a multiview encoded video from by combination of the encoded video of each camera and transmits the generated multiview encoded video to a recording system or to an end user for live service.

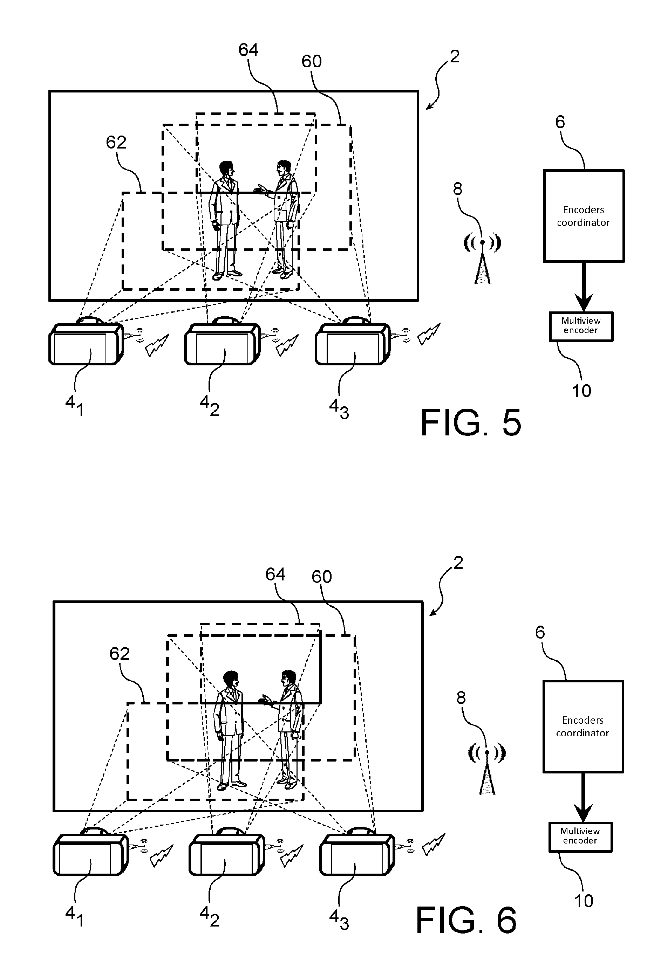

Figure 5 illustrates an exemplary implementation of the method according to the invention in which three cameras 4₁, 4₂, and 4₃ are filming the same scene from different point of views. Each camera has specific characteristics (Camera resolution, encoder type, etc ...) .

At the start of the session, the encoders coordinator 6 advertises the start of the session. Each participating camera 4 sends its static characteristics to the encoders coordinator 6. In an alternative variant, each camera 4, sends its static characteristics to the encoders coordinator when it is started to film such as lens (Zoom focal width, aperture, image stabilization, focus width, etc), sensors (format (i.e.: 4/3, 16/9, ...), supported resolution, Light sensitivity, etc and supported video encoders type with relevant parameters (ex: H264 with supported profiles).

Then, each camera 4₁, 4₂, and 4₃ will start to sends in a dynamic manner a non-exhaustive set of information to the encoders coordinator 6. This set of information may comprise at least:
- Position of the camera (computed with GPS, or other system),
- Viewpoint direction (X,Y,Z) , Focal used (zoom), Focus point (distance), low quality video encoding,
- Energy available, computing power available,
- Acceleration sensors,
- Depth of the scene (ex: distance between the camera to one or several points of the scene).

Based on the received information, the encoders coordinator 6 analyzes the set of information, and, deduces the optimal encoding parameters to be used by each device such as the coordinates of the areas of the scene viewed by the camera to be encoded by each camera 4. Said area may be a rectangle (ex: X, Y) or any suitable shape.

It is to be noted that the encoders coordinator 6 may create a model of the scene, possibly in 3D, of the part of scene visible by each camera, and perform an overlap analysis of the different views of each device. Based on this model the encoders coordinator 6 deduces the region of interest that will have to be obtained from each device.

In the example illustrated by figure 6, the encoders coordinator 6 may decide that the interesting region of the scene correspond to the region 60 view by the camera 4₃ for example and that areas 62 and 64 respectively corresponding to the contribution of cameras 4₁ and 4₂ will be limited region of interest in order to later obtain stereoscopic views of the scene.

Accordingly, camera 4₁ encodes only the intersecting of region 62 and region 60 of the scene, camera 4₂ encodes only the intersecting region 64 and region 60 of the scene, and camera 4₃ encodes the entire scene.

For each region 60, 62 and 64 to be captured, the encoders coordinator identifies further encoding parameter such as:
■ The resolution (ex : height & width pixels of the capture)
■ The color depth,
■ The minimum and maximum bandwidth expected for the encoded video
■ Any encoding parameter that could be relevant, based on each device encoder capabilities

The encoders coordinator 6 then sends to each camera 4₁, 4₂ and 4₃, the specific encoding parameters.

Once said specific encoding parameters are received by the cameras 4₁, 4₂ and 4₃, each camera 4₁, 4₂ and 4₃ sends the encoded video of its corresponding region to the encoders coordinator 6. The encoders coordinator then sends the encoded video to the multiview encoder 10.

In the example described above, the regions of interest have a rectangular shape. However, said region of interest may be of any geometric shape. It also can be a 3D shape, in case the cameras are equipped with a camera sensor that is capable of indicating for each pixel, the depth (i.e.: Time of flight camera).

In the preferred embodiment of the invention, the encoders coordinator 6 can use the encoded video received from each camera to complete the model of the scene, and thus define optimized encoding parameters.

It is to be noted that, the determination of the encoding parameters can be done dynamically, in order to adapt to the system changing condition.

Each device can send a new set of information based on a define policies in a regular manner (example, every seconds), on a specific event like the movement of a device leading to a view change, or a change of the camera parameters.

Preferably, the network capacity information can be sent to encoders coordinator based on a define policies, in a regular manner (example, every seconds), on a specific event corresponding to capacity changes, for example due to the mobility of users.

## Claims

1. A method for encoding Multi-view video content using a plurality of video source (4) for capturing a scene (2) from different points of view to produce said multi-view video content, **characterized by** the following steps:
- defining, for each video source (4), encoding parameters based on topographical parameters specific to the area of the scene to be filmed and operating parameters specific to each video source, for controlling operation of each video source (4) when filming the scene,
- transmitting said encoding parameters to each video source (4) in order to optimize the contribution of each video source (4) to the multi-view video content.

2. A method according to claim 1, wherein the topographical parameters comprise geographical data describing the area of the scene and the positions of each video source (4) within said area.

3. A method according to claim 1, wherein the operating parameters comprise camera information obtained from sensors

4. A method according to claim 1, wherein the encoding parameters contains the video encoding parameters as well as the audio encoding parameters

5. A method according to claim 1, wherein said encoding parameters are computed by an encoders coordinator (6) that communicates with each video source

6. A method according to claim 5 wherein the geographical data and the positions of each video source (4) within said area are transmitted by each video source (4) to said encoders coordinator (6)..

7. A method according to claim 3 wherein the operating parameters of each video source (4) are transmitted by each video source (4) to said encoders coordinator (6).

8. A system for encoding Multi-view video content using a plurality of video source (4) for capturing a scene from different points of view to produce said multi-view video content, **characterized by**:
- an encoders coordinator (6) adapted for defining, for each video source (4),encoding parameters based on topographical parameters specific to the area of the scene to be filmed and operating parameters specific to each video source, for controlling operation of each video source (4) when filming the scene,
- means for transmitting said encoding parameters to each video source (4) in order to optimize the contribution of each video source (4) to the multi-view video content.

9. A system according to claim 8, wherein said encoding parameters includes the video encoding parameters and the audio encoding parameters.

10. A system according to claim 8, wherein said encoders coordinator (6) comprises a wireless modem and each video source (4) is a mobile phone comprising a Wireless modem and at a camera that can be a stereoscopic.

11. A computer program stored in a recording media and comprising instructions for implementing the method according to claims 1 to 7 when it is executed by a computer.
